## Europäisches Patentamt
## European Patent Office
## Office européen des brevets

(19)

(11) Numéro de publication: **0 205 367 B1**

(12) **FASCICULE DE BREVET EUROPEEN**

(45) Date de publication du fascicule du brevet:
**03.05.89**

(21) Numéro de dépôt: **86401029.3**

(22) Date de dépôt: **14.05.86**

(51) Int. Cl.⁴: **F16K 7/10**, F16L 37/06,
E21B 33/127

(54) **Dispositif dilatable sous pression pour l'obturation de canalisations à dispositif d'auto-serrage des nappes d'armatures.**

(30) Priorité: **14.05.85 FR 8507473**

(43) Date de publication de la demande:
**17.12.86 Bulletin 86/51**

(45) Mention de la délivrance du brevet:
**03.05.89 Bulletin 89/18**

(84) Etats contractants désignés:
**DE FR GB IT NL**

(56) Documents cités:
**EP-A- 0 080 918
FR-A- 2 334 045
GB-A- 954 051
US-A- 2 643 722
US-A- 3 437 142
US-A- 3 542 127**

(73) Titulaire: **Caoutchouc Manufacturé et Plastiques
Société Anonyme dite:, 143 bis rue Yves Le Coz
B.P. 554, F-78005 Versailles Cedex(FR)**

(72) Inventeur: **Ragout, Bernard, 39, rue Pasteur,
F-63170 Aubiere(FR)**
Inventeur: **Rouby, Maurice, Rue Jacques Salez,
F-63190 Lezoux(FR)**
Inventeur: **Champleboux, Jacques Joseph, 36, rue de
Trémonteix, F-63000 Clermont-Ferrand(FR)**

**Description**

L'invention se rapporte à un dispositif à tuyau souple, dilatable, pour utilisation dans des domaines où de très hautes performances sont requises. C'est, en particulier, le cas des obturateurs de forages, pétroliers ou autres, où les fluides sont à haute pression (par exemple 350 bar) et à température élevée (par exemple 120°C).

Les systèmes d'obturateurs, utilisant les propriétés des tuyaux dilatables sont bien connus et utilisés couramment; ils existent sous des formes variées, pour des diamètres aussi différents que 50 mm ou 800 mm. On peut citer, à titre d'example, les réalisations suivant les brevets US 4 406 461, US 4 310 161 ou FR 0 087 867 qui mettent en œuvre des technologies différentes.

Le brevet EP 0 080 918 de la demanderesse décrit une application, permettant d'accroître considérablement les performances des obturateurs dilatables, en interdisant la désolidarisation de l'armature, constituée des éléments de renfort du tuyau, par rapport aux pièces d'extrémité qui sont indispensables pour permettre la mise en œuvre du principe d'obturation par dilatation de tuyau.

En effet, il résulte de l'application des principes physiques et mécaniques que les performances atteintes par de tels dispositifs dépendent, mathématiquement, des caractéristiques intrinsèques de l'armature du tuyau dilatable ainsi que de la qualité de la liaison entre la dite armature et les pièces d'extrémité.

La qualité de liaison QL est définie comme le rapport entre la force F qu'il est nécessaire d'appliquer pour dissocier l'armature des pièces d'extrémité et la résistance à la rupture R de l'armature. La qualité de liaison QL = F/R définit donc un rendement de la liaison; à titre d'exemple, une liaison sera considérée comme de mauvaise qualité lorsque, pour une résistance intrinsèque de l'armature R de 100 daN, il y aura dissociation entre l'armature et la pièce d'extrémité pour une force F de 60 daN; le rendement de la liaison sera alors de 0,60. Inversement, une bonne qualité de liaison sera atteinte lorsque le rendement sera, en toutes circonstances, voisin de 1 ou égal à 1.

Dans le cas où le rendement est égal à 1, la dissociation entraîne obligatoirement la rupture de l'armature en dehors des pièces d'extrémité.

Les dispositifs connus à ce jour, qui font appel à des techniques de sertissage, de collage, d'embarrage – soit pris isolément soit en combinaison – ne permettent jamais d'atteindre des rendements de 1 lorsque les armatures présentent des niveaux de résistance à la rupture dépassant 10.000 daN par centimètre.

Le dispositif, object de l'invention, permet d'éviter les phénomènes d'arrachage, de décollage ou de glissement qui résultent de l'emploi des dispositifs de l'art antérieur.

Une solution pour tuyaux de grands diamètres fait l'objet du brevet EP 0 080 918; elle est adaptée, principalement, aux diamètres supérieurs à 300 mm, diamètre moyen considéré au niveau des renforts.

Pour les tuyaux de moyens et petit diamètres, une solution de même principe mais de réalisation différente est proposée. La solution consiste à fournir un dispositif de tuyau souple dans lequel les extrémités sont solidarisées d'une façon extrêmement résistante aux pièces rigides d'extrémité, afin que l'ensemble puisse résister à des efforts très importants, en particulier à des pressions et des températures très élevées.

Plus spécialement, l'invention décrite vise à fournir un dispositif dans lequel le tuyau est dilatable pour servir à l'obturation des canalisations des trous de forage et applications similaires, dans lequel le mode de fixation du tuyau sur les pièces rigides d'extrémité se fait sans dépassement du diamètre extérieur du tuyau, afin d'utiliser pleinement la capacité de dilatation dudit tuyau.

Dans un tel dispositif, au moins une extrémité du tuyau est fixée, par serrage de ses nappes de renfort, entre un élément intérieur d'appui et un élément extérieur de frettage, co-axiaux, caractérisés en ce que l'élément intérieur d'appui et l'élément extérieur de frettage présentent des surfaces coniques, coaxiales, divergentes vers l'extrémité du dispositif, et en ce qu'au moins un coin est enfoncé entre les extrémités des nappes de renfort pour les serrer respectivement entre le(s) dit(s) coin(s) et les éléments d'appui et d'ancrage.

Cet arrangement diffère du système décrit dans le brevet EP 0 080 918 en ce qu'il utilise un (ou plusieurs) cône(s) réparti(s) à raison de 1 cône pour une paire de nappes alternativement droite et gauche. Il permet d'obtenir une excellente fixation de l'extrémité du tuyau du fait que, sous l'effet de la pression de service, les efforts de tension exercés sur les nappes de renfort du tuyau tendent à enfoncer le(s) coin(s) entre lesdites surfaces de serrage et à produire un effet d'auto-serrage de ces nappes, à la fois contre les surfaces du (ou des) coin(s) adjacent(s) et les surfaces des éléments d'appui intérieur et de frettage. De préférence, l'angle au sommet de la section d'un coin présente une valeur faible, de l'ordre de 5 à 15°, répartie de part et d'autre de la surface cylindrique passant par le sommet du coin. Cette disposition permet, notamment, de donner aux pièces rigides une section suffisante tout en maintenant leur diamètre à une valeur égale ou peu supérieure à celle du diamètre du corps du tuyau.

Afin de rendre cet arrangement encore plus efficace, il est prévu d'équilibrer les forces d'appui et de serrage des nappes entre les surfaces des éléments en rendant possible une extension ou une contraction du (ou des) coin(s) au moyen de fentes interrompant la section circulaire, ainsi qu'en évitant qu'une adhérence trop forte de l'élément d'appui d'une part et de l'élément extérieur de frettage d'autre part ne s'oppose à l'effet d'auto-serrage des éléments entraîné par l'effort de tension des nappes de renfort.

L'ensemble de ces moyens agit conjointement pour rendre opérant l'effet d'auto-serrage, proportionnellement à l'effort de tension exercé par les nappes de renfort dès que la mise en service sollicite l'armature sous l'effet de la pression. La non-adhérence desdits éléments autorise le serrage, qui est automatiquement réparti et équilibré. Les fentes du (ou des) coin(s) rendent possible la contraction ou la dilatation du (ou des) dit(s) coin(s).

D'autres caractéristiques et avantages de l'invention ressortiront de la description détaillée d'un example de réalisation illustré par les figures 1 à 5.

La figure 1 est une vue en élévation demi-coupe d'une extrémité du dispositif d'obturation, selon l'invention, utilisant deux coins, à l'état libre c'est-à-dire non dilaté.

La figure 2 est une vue partielle des coins montrant la disposition des fentes d'équilibrage sur un coin.

Les figures 3 et 4 sont des vues partielles, en coupe, du dispositif à deux coins, montrant le positionnement des fentes avant et après mise en service du dispositif objet de l'invention.

La figure 5 est une vue partielle, en coupe, d'une extrémité montrant une méthode de réalisation de l'invention. La demi-coupe supérieure montre un dispositif à deux coins, en service, c'est-à-dire à l'état gonflé. La demi-coupe inférieure montre le même dispositif à deux coins, au repos, en l'absence de gonflage.

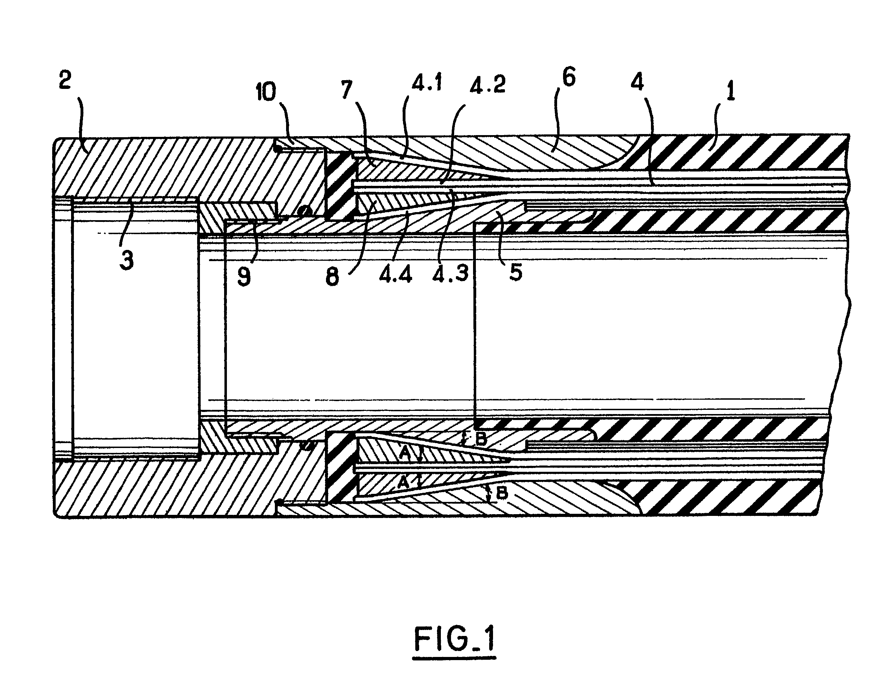

Le dispositif illustré sur la figure 1 comprend essentiellement un manchon tubulaire (1), en caoutchouc, fixé à chaque extrémité sur un ensemble rigide (2) comprenant des moyens de fixation tel que le filetage (3) sur une pièce d'obturation de l'ensemble (non représentée), ou de tout autre moyen prolongeant le dispositif objet de l'invention, pour participer à sa mise en œuvre. La paroi du manchon en caoutchouc (1) est renforcée par des paires de nappes (4) déjà connues du brevet EP 0 080 918.

Selon l'invention, le manchon tubulaire (1) est fixé à l'ensemble rigide (2) formant extrémité du dispositif. Pour obtenir cette fixation, les extrémités (4.1), (4.2), (4.3) et (4.4) des nappes ou paires de nappes (4) sont engagées dans l'espace annulaire conique compris entre les éléments d'appui (5) et de frettage (6) co-axiaux, l'élément d'appui (5) et l'élément de frettage (6) ayant des surfaces de serrage en regard qui limitent l'espace conique divergent vers les extrémités des nappes (4).

Dans cette réalisation, un troisième élément rigide (7) et un quatrième élément rigide (8), en forme de coin, sont enfoncés axialement, respectivement entre les extrémités (4.3) et (4.4) et les extrémités (4.1) et (4.2) des paires de nappes de renfort (4), de façon à serrer ces extrémités respectivement contre l'élément d'appui (5) et l'élément de frettage (6) en prenant appui, l'un sur l'autre, par l'intermédiaire des extrémités (4.2) et (4.3) serrées l'une sur l'autre dans la partie centrale de l'espace conique compris entre l'élément d'appui (5) et l'élément de frettage (6).

Eventuellement, les surfaces de serrage des coins, comme, par exemple, les surfaces de serrage du coin (7) avec les nappes (4.3) et (4.4) pourraient présenter des crans, des nervures ou des aspérités propres à augmenter l'adhérence et l'accrochage des nappes à ces surfaces.

Selon l'invention, la surface de serrage entre l'élément d'appui (5) et l'extrémité (4.4) de l'armature (4) d'une part, et la surface de serrage entre l'élément de frettage (6) et l'extrémité (4.1) de l'armature (4) d'autre part, sont rendues non-adhérentes par rapport aux matières telles que, par exemple, le caoutchouc dont sont imprégnées les nappes (4) de l'armature.

Les extrémités (4.1), (4.2), (4.3) et (4.4) des nappes de l'armature (4) sont débarrassées, avant leur mise en place dans l'espace conique de serrage de la couche externe de caoutchouc dans lequel sont généralement enrobés les cables qui constituent ces nappes. On obtient ainsi un contact direct des cables avec les surfaces de serrage, propre à augmenter l'efficacité dudit serrage.

Avec cet arrangement, tout effort de traction exercé sur l'armature (4), par suite de l'application d'une pression de gonflage, tend à entraîner les coins (7) et (8) dans le sens de leur enfoncement entre l'élément d'appui (5) et l'élément de frettage (6) et à produire, ainsi, un auto-serrage des extrémités (4.1), (4.2), (4.3) et (4.4) des nappes de renfort entre les surfaces coniques correspondantes. Cet auto-serrage est considérablement amélioré par la non-adhérence des surfaces coniques appartenant à l'élément d'appui (5) et à l'élément de frettage (6) qui sont rendus solidaires de la pièce d'extrémité (2) par des moyens de liaison tels que les filetages (9) et (10). Il résulte de la disposition des coins (7) et (8) ainsi que de leur adhérence sur les extrémités (4.1), (4.2), (4.3) et (4.4) et de la présence des fentes décrites ci-après, qu'ils agissent ensemble et séparément suivant le même principe que l'invention décrite dans le brevet EP 0 080 918, en présentant l'avantage supplémentaire de s'adapter à un plus grand nombre de paires de nappes.

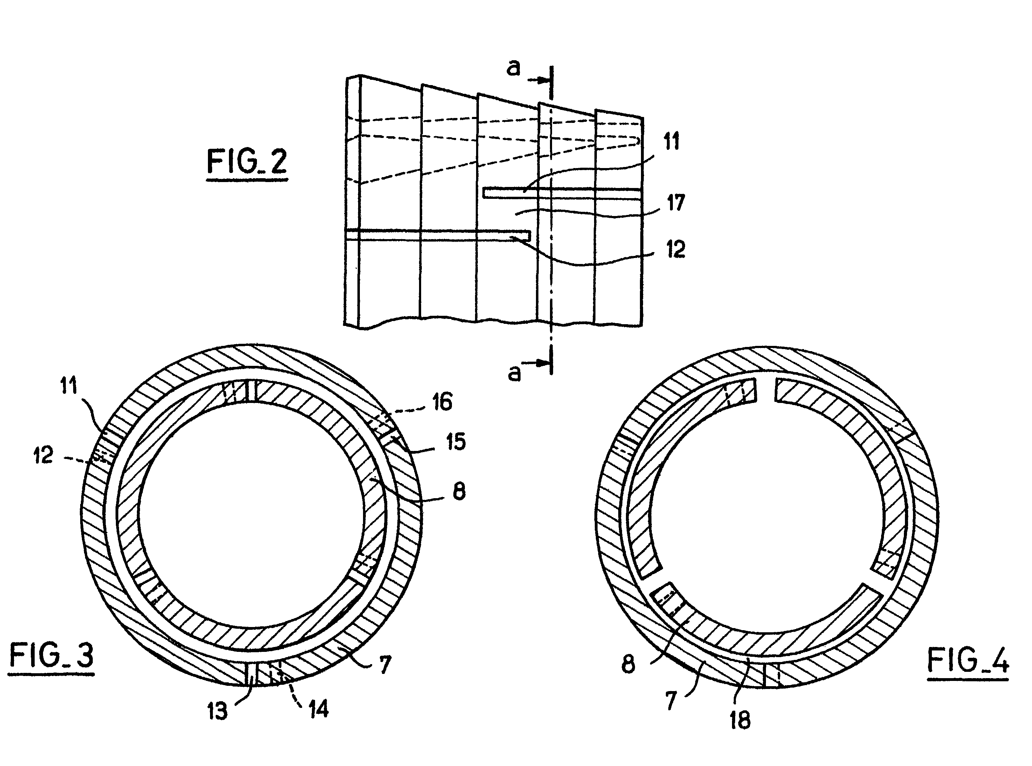

Selon l'invention, un arrangement à deux paires de nappes et deux coins co-axiaux est conforme à la description des figures 2, 3 et 4 dans lesquelles la figure 2 est une représentation partielle d'un coin vu par sa face latérale externe, la figure 3 complète cette description par une section a–a de l'arrangement de la figure 2, en position neutre, telle qu'elle est réalisée, par exemple, au moment du montage du dispositif. Les fentes d'équilibrage, telles que (11) et (12), sont réparties par couples, décalés de 120° par exemple, tels que les couples (11) et (12), (13) et (14) ou (15) et (16) sur le coin (7).

Chaque couple de fentes, tels que (11) et (12) est réalisé par usinage du cône une fente étant décalée par rapport à l'autre, en position et en profondeur, de manière à laisser subsister un pédoncule de matière (17) entre lesdites fentes dont la longueur et la section sont choisies de manière à permettre une déformation résultant de l'élargissement ou du rétrécissement des fents au cours de la mise en place des cônes ou de leur réaction au moment du serrage entre l'élément d'appui et l'élément de frettage. La largeur pratique des fentes est comprise entre 1 et 3 mm, la somme des profondeurs des fentes d'un couple étant, de préférence supérieure de 5 à 10 mm à la longueur représentée par la distance normale entre le sommet et la base du cône. De préférence, la section du pédoncule (17) est comprise entre 20 et 50 mm$^2$.

Selon l'invention, un ensemble de deux coins est monté de manière à décaler les couples de fentes du coin intérieur par rapport aux couples de fentes du coin extérieur d'un demi angle définissant l'espacement angulaire des couples de fentes du coin intérieur; ainsi est évité le risque de superposition des couples de fentes de deux ou plusieurs coins co-axiaux.

La figure 4 représente les positions respectives de la section a–a de deux coins tels que (7) et (8), après équilibrage du serrage entre les éléments d'appui et de frettage. Sous l'effet dudit serrage, les fentes du coin (7) se sont fermées, ce qui, par réduction de la circonférence de la section du coin, équivaut à une contraction axiale dudit coin. Simultanément et sous l'effet du même serrage, le coin (8) est sollicité, par exemple, en expansion, ce qui correspond à une expansion radiale et à un écartement des fentes d'équilibrage.

Cette disposition apporte un avantage important sous l'effet d'une répercussion de l'effet de serrage sur les nappes qui sont insérées dans l'espace (18) compris entre les deux coins (7) et (8).

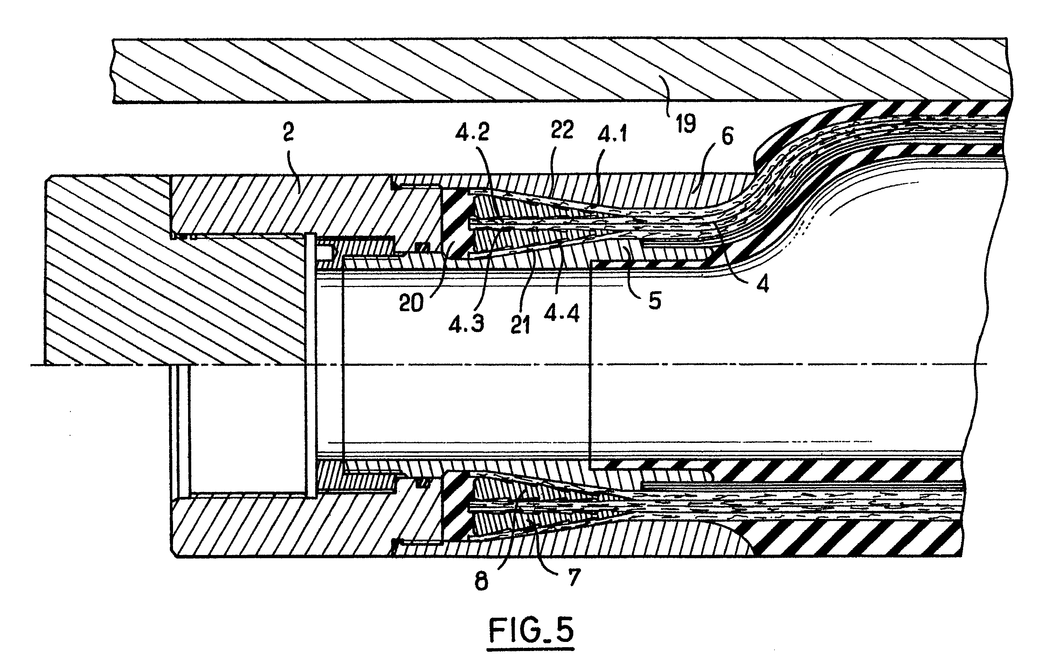

Il en résulte que le dispositif décrit améliore les performances du système décrit dans le brevet EP 0 080 918, notamment pour les tuyaux de moyens ou petits diamètres et pour un nombre de paires de nappes égal ou supérieur à 2. La figure 5 représente, sur la demi-coupe inférieure, un dispositif selon l'invention, à deux coins, à l'état de repos et, sur la demi-coupe supérieure, le même dispositif, en position de travail, à l'état gonflé, obturant une canalisation (19).

Selon cet exemple de réalisation, les coins (7) et (8) sont crantés pour améliorer leur accrochage sur les nappes et garantir leur parfait entraînement par celles-ci, sous l'effet d'une sollicitation due à la pression. L'espace (20) compris entre les extrémités des nappes (4.1) à (4.4), la base des coins (7) et (8) et la pièce d'extrémité (2) est comblé par un élastomère de remplissage assurant une parfaite étanchéité du dispositif contre une éventuelle pénétration de fluide entre les nappes (4.1) à (4.4) et les coins (7) et (8).

Les surfaces coniques de serrage (21) de l'élément d'appui (5) et (22) de l'élément de frettage (6) ont été revêtues, avant montage, d'un produit anti-adhérent, tel que, à titre d'exemple non limitatif, du P.T.F.E. en aérosol.

Les coins (7) et (8), co-axiaux, ont des sections symétriques par rapport à la surface cylindrique définie entre les nappes (4.2) et (4.3) telles que l'angle total au sommet est voisin de 20°.

## Revendications

1. Dispositif d'obturation pour canalisations présentant un obturateur dilatable sous pression élevée, comportant un tuyau (1) souple et élastique qui est renforcé par au moins deux nappes d'armatures (4) en cables souples disposés en hélice et qui est fixé au moins à une extrémité sur deux éléments rigides annulaires co-axiaux, lesdits éléments rigides annulaires étant consitutés par un élément intérieur d'appui (5) et un élément extérieur de frettage (6) qui présentent des surfaces coniques divergentes vers l'extrémité du tuyau souple pour serrer directement lesdites nappes d'armatures (4) et au moins un troisième élément rigide annulaire présentant une section en coin dont les surfaces coniques sont à enfoncer entre les extrémités des nappes d'armatures (4) afin de produire, sous l'effet de la tension des nappes d'armatures en cours de service, un auto-serrage respectivement contre l'élément d'appui (5) et l'élément de frettage (6), caractérisé en ce que:

i) les surfaces de serrage coniques sont non-adhérentes par rapport aux matériaux dont sont imprégnées les nappes d'armatures (4), évitant ainsi qu'une adhérence trop forte de l'élément d'appui (5) et de l'élément de frettage (6) ne s'oppose à l'effet d'auto-serrage des éléments d'appui (5) et de frettage (6) entraîné par la tension des nappes d'armatures (4),

ii) ledit troisième élément rigide annulaire à section en coin (7, 8) est pourvu de fentes interrompant sa section circulaire destinées à équilibrer les forces d'appui et de serrage des nappes d'armatures (4) entre les surfaces de l'élément d'appui (5) et de l'élément de frettage (6).

2. Dispositif selon la revendication 1, caractérisé en ce que le nombre de coins est en rapport avec le nombre de nappes de renfort 4), lesdites nappes étant disposées par paires dont le sens d'enroulement est inversé, et que le dit rapport est de 1 coin par paire de nappes.

3. Dispositif selon l'une des revendications 1 ou 2, caractérisé en ce que chaque coin présente des surfaces de serrage coniques dont l'angle au sommet A de la section est compris entre 5 et 15°.

4. Dispositif selon l'une des revendications 1 à 3, caractérisé en ce que l'angle de pente B des surfaces de serrage de l'élément d'appui (5) et de l'élément de frettage (6) est compris entre 5 et 20°.

5. Dispositif selon l'une des revendications 1 à 4, caractérisé en ce que l'élément d'appui (5) et l'élément de frettage (6) sont solidaires l'un de l'autre dans le sens axial.

6. Dispositif selon l'une des revendications 1 à 5, caractérisé en ce que chaque coin présente des couples de fentes axiales (11) et (12) de sens inverse et séparées par un pédoncule (17).

7. Dispositif selon l'une des revendications 1 à 6, caractérisé en ce que les couples de fentes axiales sont au nombre de 3 par coin et d'une largeur comprise entre 1 et 3 mm.

8. Dispositif selon l'une des revendications 1 à 7, caractérisé en ce que les extrémités des nappes (4.1), (4.2), (4.3) et (4.4), au contact des surfaces de serrage sont dépourvues de revêtement pouvant s'interposer entre les cables des nappes et les surfaces de serrage.

9. Dispositif selon l'une des revendications 1 à 8, caractérisé en ce que la surface de serrage (21) de l'élément d'appui (5) et la surface de serrage (22) de l'élément de frettage (6) sont anti-adhérentes, soit par nature, soit par apport d'un traitement approprié.

10. Dispositif selon l'une des revendications 1 à 9, caractérisé en ce que le nombre des coins (7) et/ou (8) est égal à deux et, par conséquent, le nombre des nappes de renfort est égal à 4.

## Claims

1. Closure device for pipes, comprising a closure member expansible under high pressure, incorporating a flexible and elastic tube (1) which is strengthened by means of at least two layers of reinforcements (4) of helically arranged flexible cables and which is secured at least at one end on two rigid coaxial annular elements, the said rigid annular elements being formed by an internal support element (5) and an external binding element (6) which have tapering surfaces diverging towards the end of the flexible tube for direct clamping of the said layers of reinforcements (4) and at least one third rigid annular element having a wedge-like section, the tapering surfaces of which are to be inserted between the ends of the layers of reinforcements (4) to establish under the effect of the tension of the layers of reinforcements during operation, a self-clamping action, respectively against the suport element (5) and the hooping element (6), characterised in that:

i) the tapering clamping surfaces are non-adhesive with respect to the materials with which the layers of reinforcements (4) are impregnated, thereby preventing an excessive adhesion between the support element (5) and the binding element (6) from acting against the self-clamping action of the support (5) and binding (6) elements, caused by the tension of the reinforcing layers (4).

ii) the said third rigid annular element of wedge-like cross-section (7, 8) is provided with slots interrupting its circular cross-section, intended to balance the forces for supporting and clamping the reinforcing layers (4) between the surfaces of the support element (5) and the binding element (6).

2. Device according to claim 1, characterised in that the number of wedges is proportional to the number of reinforcing layers (4), the said layers being incorporated in pairs the winding direction of which is reversed and in that the said proportion is 1 wedge per pair of layers.

3. Device according to one of claims 1 or 2, characterised in that each wedge has tapered clamping surfaces the apex angle A of the cross-section of which is comprised between 5 and 15°.

4. Device according to one of claims 1 to 3, characterised in that the angle of inclination B of the clamping surfaces of the support element (5) and of the binding element (6) is comprised between 5 and 20°.

5. Device according to one of claims 1 to 4, characterised in that the support element (5) and the binding element (6) are integral with one another in the axial direction.

6. Device according to one of claims 1 to 5, characterised in that each wedge has pairs of axial slots (11) and (12) of opposite directions and separated by a web (17).

7. Device according to one of claims 1 to 6, characterised in that the pairs of axial slots amount to 3 per wedge and have a width comprised between 1 and 3 mm.

8. Device according to one of claims 1 to 7, characterised in that the ends of the layers (4.1), (4.2), (4.3) and (4.4) in contact with the clamping surfaces are denuded of covering which could be interposed between the cables of the layers and the clamping surfaces.

9. Device according to one of claims 1 to 8, characterised in that the clamping surface (21) of the support element (5) and the clamping surface (22) of the binding element (6) are anti-adhesive, either by nature or by application of an appropriate treatment.

10. Device according to one of claims 1 to 9, characterised in that the number of wedges (7) and/or (8) is equal to two and that the number of reinforcing layers is consequently equal to 4.

## Patentansprüche

1. Vorrichtung zum Abdichten von Rohrleitungen mit einer unter Druck aufblasbaren Dichtung, umfassend einen weichen und elastischen Schlauch (1), der durch mindestens zwei Verstärkungslagen (4) aus schraubenlinienförmig angeordneten weichen Drahtseilen verstärkt und an mindestens einem Ende auf zwei starren koaxialen ringförmigen Elementen festgelegt ist, wobei diese starren ringförmigen Elemente aus einem inneren Stützelement (5) und aus einem äußeren Schrumpfelement (6) bestehen, die konische Flächen haben, die zum Ende des weichen Schlauches hin divergieren, um die besagten Verstärkungslagen (4) unmittelbar einzuklemmen, und mindestens ein drittes starres ringförmiges Element mit keilförmigem Querschnitt, dessen konische Flächen zwischen die Enden der Verstärkungslagen (4) hineingedrückt werden, um unter der im Betrieb auftretenden Spannung der Verstärkungslagen eine Selbstklemmung gegen das Stützelement (5) und das Schrumpfelement (6) zu bewirken, dadurch gekennzeichnet,

i) daß die konischen Klemmflächen in Bezug auf die Materialien, mit denen die Verstärkungslagen (4) imprägniert sind, nicht klebend sind, wodurch ein zu starkes Anhaften des Stützelementes (5) und des Schrumpfelementes (6) die selbstklemmende Wirkung des Stützelementes (5) und des Schrumpfelementes (6) unter der Spannung der Verstärkungslagen (4) nicht behindert,

ii) daß das einen keilförmigen Querschnitt aufweisende dritte starre ringförmige Element (7, 8) mit den Umfang desselben unterbrechenden Schlitzen versehen ist, um die Stütz- und Klemmkräfte der Verstärkungslagen (4) zwischen den Flächen des Stützelementes (5) und des Schrumpfelementes (6) auszugleichen.

2. Vorrichtung nach Anspruch 1, dadurch gekennzeichnet, daß die Anzahl der Keile zur Anzahl der Verstärkungslagen (4) im Verhältnis steht, wobei die Verstärkungslagen mit entgegengesetzter Wickelrichtung paarweise angeordnet sind und das besagte Verhältnis einen Keil auf zwei Verstärkungslagen beträgt.

3. Vorrichtung nach Anspruch 1 oder 2, dadurch gekennzeichnet, daß jeder Keil konische Klemmflächen hat, die einen Winkel (A) von 5 bis 15° einschließen.

4. Vorrichtung nach einem der Ansprüche 1 bis 3, dadurch gekennzeichnet, daß der Neigungswinkel (B) der Klemmfläche des Stützelementes (5) und des Schrumpfelementes (6) 5 bis 20° beträgt.

5. Vorrichtung nach einem der Ansprüche 1 bis 4, dadurch gekennzeichnet, daß das Stützelement (5) und das Schrumpfelement (6) in axialer Richtung jeweils einstückig sind.

6. Vorrichtung nach einem der Ansprüche 1 bis 5, dadurch gekennzeichnet, daß jeder Keil Paare von entgegengesetzt gerichteten axialen Schlitzen (11) und (12) hat, die durch einen Steg (17) voneinander getrennt sind.

7. Vorrichtung nach einem der Ansprüche 1 bis 6, dadurch gekennzeichnet, daß jeder Keil drei Paare von axialen Schlitzen mit einer Breite von 1 bis 3 mm aufweist.

8. Vorrichtung nach einem der Ansprüche 1 bis 7, dadurch gekennzeichnet, daß die mit den Klemmflächen in Berührung stehenden Enden der Verstärkungslagen (4.1), (4.2), (4.3) und (4.4) von der Umhüllung befreit sind, die sich zwischen den Drahtseilen der Verstärkungslagen und den Klemmflächen anlagern könnte.

9. Vorrichtung nach einem der Ansprüche 1 bis 8, dadurch gekennzeichnet, daß die Klemmfläche (21) des Stützelementes (5) und die Klemmfläche (22) des Schrumpfelementes (8) von Haus aus oder durch eine geeignete Behandlung nicht klebend ist.

10. Vorrichtung nach einem der Ansprüche 1 bis 9, dadurch gekennzeichnet, daß die Zahl der Keile (7) und/oder (8) zwei beträgt und daß demzufolge die Anzahl der Verstärkungslagen vier beträgt.

FIG.1

EP 0 205 367 B1

FIG.2

a

11

17

12

a

FIG.3

11

12

16

15

8

7

13 14

FIG.4

8

7

18

EP 0 205 367 B1

FIG.5

EP 0 205 367 B1